# EUROPEAN PATENT APPLICATION

(11) **EP 4 432 311 A1**
(43) Date of publication of application: **18.09.2024**
(21) Application number: 23161846.3
(22) Date of filing: 14.03.2023
(51) Int. Cl.: H01B 7/14, H01B 7/20, H01B 7/282, H02G 1/14

(54) **SUBMARINE POWER CABLE HAVING SECTIONS WITH DIFFERENT WATER PERMEABILITY**

(71) Applicant: NKT HV Cables AB, 371 60 Lyckeby (SE)
(72) Inventor: FRIBERG, Peter, Rödeby (SE); ERIKSSON, Erik, Växjö (SE)
(74) Representative: Kransell & Wennborg KB

(57) **Abstract**

A submarine power cable (1) comprising a conductor, an insulation system arranged around the conductor, the insulation system comprising an inner semiconducting layer, an insulation layer arranged around the inner semiconducting layer, and an outer semiconducting layer arranged around the insulation layer, and a polymeric sheath arranged around the insulation system, wherein the first section (1c) has a mechanically flexible sheath arranged around the insulation system, wherein the mechanically flexible sheath has a lower radial water permeability than a radial water permeability of any layer arranged outside the insulation system in the second sections (1a, 1b).

## Description

### TECHNICAL FIELD

The present disclosure generally relates to submarine power cables.

### BACKGROUND

Submarine power cables have traditionally had a lead sheath which acts as a radial water barrier protecting the insulation system. There is a trend towards a lead-free radial hermetically sealed water barrier design. Hereto, much effort has been made to arrive at metallic water barriers of for example copper, various copper alloys, aluminium, and stainless steel which accommodate the needs of modern cable designs.

### SUMMARY

Submarine power cables may under certain conditions be designed with lower requirements on protecting the insulation system from radial water ingress. Even so, there may be a section or sections along such a submarine power cable which benefits from having a better protection against radial water ingress

In view of the above, an object of the present disclosure is to provide a submarine power cable which solves or at least mitigates the problems of the prior art.

There is hence provided a submarine power cable comprising a conductor, an insulation system arranged around the conductor, the insulation system comprising an inner semiconducting layer, an insulation layer arranged around the inner semiconducting layer, and an outer semiconducting layer arranged around the insulation layer, and a polymeric sheath arranged around the insulation system, wherein the submarine power cable has a first section arranged axially between two second sections, wherein the first section has a mechanically flexible sheath arranged around the insulation system, wherein the mechanically flexible sheath has a lower radial water permeability than a radial water permeability of any layer arranged outside the insulation system in the second sections.

By providing the first section with lower radial permeability to water than the second sections, moisture sensitive regions inside the submarine power cable may be better protected from moisture ingression along the first section. Further, material use and/or the weight of the submarine power cable may be reduced because of the second sections which have lower requirements on the radial water permeability. In the second sections a barrier specifically for preventing radial water ingress can be discarded with completely or a simpler barrier solutions with lower requirements may be used.

The polymeric sheath extends around the insulation system along the second sections and along the first section(s).

According to one embodiment the mechanically flexible sheath comprises a water blocking layer arranged around the insulation system along at least 20% of the length of the first section, such as along the entire first section.

According to one example, the submarine power cable may comprise a rigid sea joint, the rigid sea joint being arranged at least partly along the first section. The water blocking layer will in this case not extend along the entire first section. The rigid sea joint may comprise an inner watertight casing against which the water blocking layer may be terminated and sealed from both ends of the inner watertight casing. The first section will in this case be composed of the inner watertight casing, and the two sections of water blocking layer extending axially from the inner watertight casing. A rigid outer casing, which when the submarine power cable is installed contains water, may be arranged around the inner watertight casing and around the two sections of water blocking layer.

According to one embodiment the water blocking layer is a metallic water blocking layer.

According to one embodiment the metallic water blocking layer is a longitudinally welded metal sheath, an extruded metal sheath, or a longitudinally bonded laminated sheath. The bonding may for example be by means of an adhesive or solder.

The metallic water blocking layer may for example comprise a copper material, stainless steel such as austenitic stainless steel, aluminium, or lead.

According to one embodiment each of the two second sections are longer than the first section.

According to one embodiment the first section is at least 1 m, such as at least 2 m, such as at least 3 m, such as at least 5 m, or at least 10 m.

According to one embodiment the first section is at most 200 m, such as at most 150 m, such as at most 100 m, such as at most 50 m.

According to one embodiment each second section is at least 500 m long, such as at least 1000 m long, such as at least 5000 m long.

One embodiment comprises a joint arranged in the first section.

According to one embodiment the joint comprises a conductor joint and a joint insulation system arranged around the conductor joint. The conductor joint and the joint insulation system is thus protected from radial water ingress along the first section.

According to one embodiment the joint insulation system is a vulcanized joint insulation system or comprises a prefabricated elastomeric sleeve.

One embodiment comprises a water swellable tape arranged between the insulation system and the polymeric sheath along the entire second sections.

One embodiment comprises a water swellable tape arranged between the insulation system and the polymeric sheath along the entire first section.

According to one embodiment the submarine power cable is an AC power cable or a DC power cable.

The submarine power cable may be an AC power cable with a voltage rating of 33 kV or higher. The voltage rating may for example be 66 kV or higher, such as 132 kV or higher.

According to one embodiment the submarine power cable comprises an outer sheath or outer serving, which is the outermost layer of the submarine power cable, wherein the outer sheath or outer serving extends along a majority of or the entire length of the first section.

The submarine power cable may be an array cable or an export cable for offshore windfarm applications.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a sideview of an example of a submarine power cable;
Fig. 2 schematically shows a cross-section of the submarine power cable in Fig. 1 along lines A-A;
Fig. 3 schematically shows a cross-section of the submarine power cable in Fig. 1 along lines B-B; and
Fig. 4 is a close-up view schematically showing a longitudinal section of the first section of the submarine power cable in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

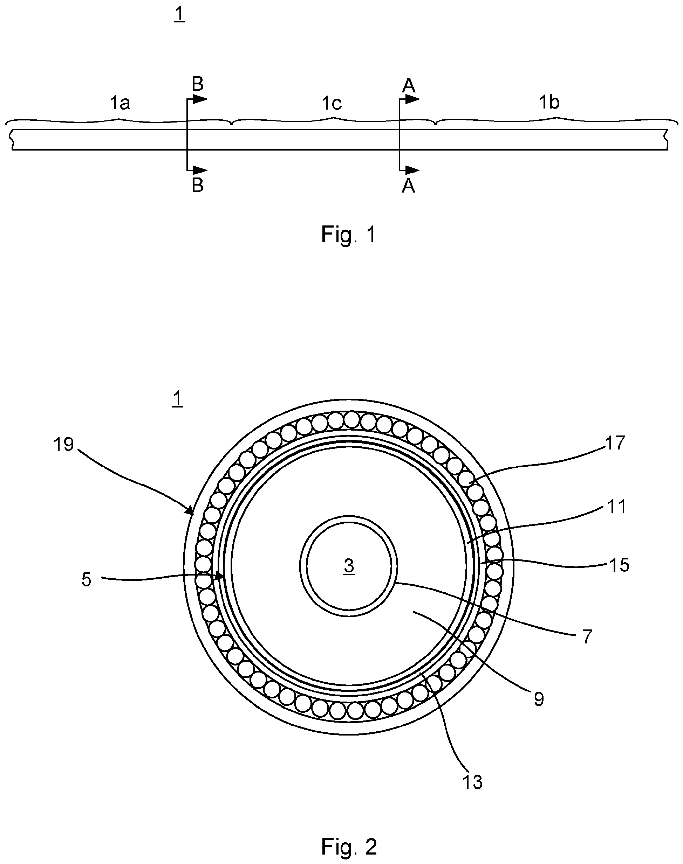

Fig. 1 shows a sideview of an example of a submarine power cable 1. The submarine power cable 1 has a hybrid design with regards to radial water ingress protection. The submarine power cable 1 comprises second sections 1a and 1b, which are axially extending sections of the submarine power cable 1. Further, the submarine power cable 1 comprises a first section 1c, arranged axially in between the two second sections 1a and 1b. The first section 1 is thus also an axially extending section of the submarine power cable 1. The first section 1c directly neighbours the two second sections 1a, 1b. The first section 1c thus transitions into the two second sections 1a and 1b.

The first section 1c has better radial water ingress protection than the second sections 1a and 1b.

When the submarine power cable 1 has been installed offshore, a majority or entirety of the second sections 1a and 1b, and the first section 1c, are arranged subsea, i.e., under water.

The first section 1c may according to one example be so long that an axial subsection of the first section 1c is located sufficiently far away from each of the neighbouring second sections 1a and 1b that longitudinal water ingress from one of the second sections 1a, 1b to reach the axial subsection would take the entire operational lifetime of the submarine power cable 1, or at least that the water ingress would be of such small quantity during the operational lifetime of the submarine power cable 1 that the relative humidity in the insulation system in the axial subsection would be below a threshold above which water treeing may occur.

The first section 1c may be at least 1 m, such as at least 2 m, such as at least 3 m, such as at least 5 m, or at least 10 m. The first section 1c may typically be at most 200 m, such as at most 150 m, such as at most 100 m, such as at most 50 m.

Each second section 1a, 1b may be at least 500 m long, such as at least 1000 m long, such as at least 5000 m long.

Typically, each of the second sections 1a and 1b is at least one order of magnitude longer than the first section 1c.

Fig. 2 schematically shows a cross section of an example of a submarine power cable 1 along lines A-A in Fig. 1, i.e., along the first section 1c.

Although the exemplified submarine power cable 1 depicts a single core submarine power cable, the submarine power cable 1 could alternatively be a multi-core submarine power cable.

The submarine power cable 1 may be an AC submarine power cable or a DC submarine power cable.

The submarine power cable 1 comprises a conductor 3, and an insulation system 5 arranged around the conductor 3.

The insulation system 5 comprises an inner semiconducting layer 7 which is arranged around the conductor 3, an insulation layer 9 arranged around the inner semiconducting layer 7, and an outer semiconducting layer 11 arranged around the insulation layer 9.

The insulation system 5 may be an extruded insulation system or a paper-based insulation system which is impregnated with insulating fluid such as an oil.

In case the insulation system 5 is an extruded insulation system, the insulation system comprises a polymer material such as polyethylene, crosslinked polyethylene, polypropylene, ethylene propylene rubber (EPR) or ethylene propylene diene monomer rubber (EPDM).

The exemplified submarine power cable 1 also comprises a mechanically flexible sheath 13 provided around the insulation system 5. The mechanically flexible sheath 13 is a water blocking layer 13, in particular a radial water blocking layer 13. The water blocking layer 13 The mechanically flexible sheath 13 may be a metallic water blocking layer.

The mechanically flexible sheath 13 13 may extend continuously along the entire first section 1c. The mechanically flexible sheath 13 which is provided around the insulation system 5 along the first section 1c extends only along the first section(s) 1c of the submarine power cable 1. There is thus no mechanically flexible sheath 13 or a different type of mechanically flexible sheath, with higher radial permeability to water than the mechanically flexible sheath along the first section 1c provided along the second sections 1a and 1b.

The mechanically flexible sheath13 may for example comprise lead, a copper material such as oxygen-free copper, or a copper alloy such as a copper-nickel alloy, stainless steel such as an austenitic stainless steel, or aluminium.

The mechanically flexible sheath 13 may have a longitudinal weld seam or it may be soldered, or it may be an extruded metal sheath. The welding may have been carried out autogenously, i.e., without utilising any filler material. Alternatively, the mechanically flexible sheath 13 may be a laminated sheath with opposite edges bonded by an adhesive. The laminated sheath may comprise one or more polymer layers and a metal layer, such as an aluminium layer.

The metallic water blocking layer 13 may be smooth, i.e., non-corrugated, or corrugated.

The submarine power cable 1 may according to one example comprise a water blocking, or water swellable, tape arranged between the insulation system and the mechanically flexible sheath 13 along the first section 1c. The water swellable tape may according to one example be arranged along the entire length of the first section 1c. The water swellable tape reduces or restricts longitudinal water ingression, e.g., from the second sections 1a, 1b to the first section 1c.

The submarine power cable 1 may according to one example comprise a screen layer comprising a plurality of metal wires, such as copper wires, arranged helically around the insulation system 5, radially inside the metallic water blocking layer 13.

The submarine power cable 1 may comprise a polymeric sheath 15 arranged around the mechanically flexible sheath 13. The polymeric sheath 15 may be extruded onto the mechanically flexible sheath 13 along the first section 1c.

The submarine power cable 1 may comprise an armour layer comprising a plurality of elongated armour elements 17. The armour layer is arranged around the polymeric sheath 15.

Further, the submarine power cable 1 may comprise an outer sheath or outer serving 19 arranged around the armour layer. The outer sheath or outer serving 19 may form the outermost layer of the submarine power cable 1.

In examples in which the submarine power cable is a multi-core submarine power cable, each core would along the first section 1c have the general structure described above up until the polymeric sheath 15. The cores are arranged in a stranded configuration with the optional armour layer arranged around all the cores.

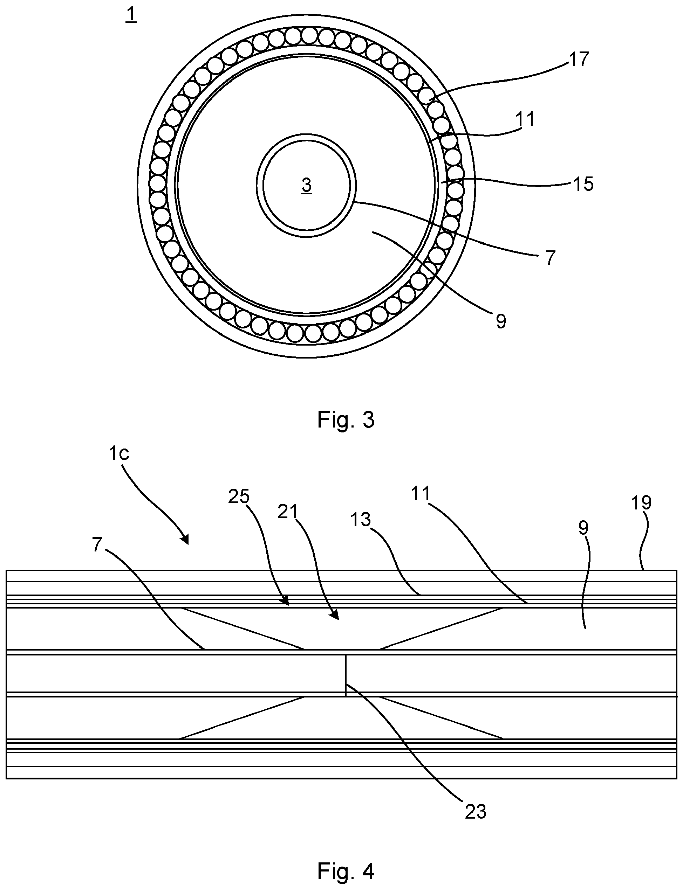

Fig. 3 schematically shows a cross-section of an example of a submarine power cable 1 along lines B-B in Fig. 1, i.e., along the second section 1a. The second section 1b may be identical or similar to the second section 1a.

In general, in the second section 1a the submarine power cable 1 has the same structure as in the first section 1c from the conductor 3 up until the outer semiconducting layer 11. The second section 1a may however be free of the mechanically flexible sheath 13 or alternatively have a mechanically flexible sheath which has a higher radial water permeability than the mechanically flexible sheath 13 of the first section 1c. Hereto, the polymeric sheath 15 may according to some examples be arranged directly outside the outer semiconducting layer 11. Alternatively, according to some examples the submarine power cable 1 may comprise e.g., a screen layer comprising a plurality of metal wires, which may be a continuation of the screen layer in the first section 1c, if the first section 1c is provided with a screen layer, and the polymeric sheath 15 may be arranged around the screen layer. According to one example, the screen layer may be electrically connected to the mechanically flexible sheath13, if it is a metallic water blocking layer, of the first section 1c, in case the first section 1c is free of the screen layer, to be able to handle fault currents along the entire length of the submarine power cable 1.

In case the mechanically flexible sheath 13 of the first section 1c is a laminated sheath, the second sections 1a and 1b is without a laminated sheath and also without a metallic extruded or longitudinally welded or soldered mechanically flexible sheath. In case the mechanically flexible sheath 13 of the first section 1c is an extruded or longitudinally welded or soldered mechanically flexible sheath, the second sections 1a and 1b may be without a laminated sheath, have a laminated sheath because laminated sheaths have edges bonded by adhesive and have a lower radial water permeability in the bonded region than a metallic extruded or longitudinally welded or soldered mechanically flexible sheath, or have a metallic tape wound around the insulation system 5.

According to one example, the submarine power cable 1 may have a water swellable tape arranged between the insulation system and the polymeric sheath 15.

In examples in which the submarine power cable is a multi-core submarine power cable, each core would along the second sections 1a and 1b have the general structure described above up until the polymeric sheath 15. The cores are arranged in a stranded configuration with the optional armour layer arranged around all the cores.

Fig. 4 schematically shows a longitudinal section of a portion of the submarine power cable 1 along the first section 1c. According to the example, the submarine power cable 1 comprises a joint 21, which includes a conductor joint 23 and a joint insulation system 25 arranged around the conductor joint 23. The conductor joint 23 and the joint insulation system 25, which is a restoration of the insulation system 5 over the conductor joint 23, are thus contained within the first section 1c of the submarine power cable 1. According to one example, the conductor joint 23 and the joint insulation system 25 may be contained within the previously described axial subsection.

The joint insulation system 25 may be a vulcanized joint insulation system, i.e., the joint 21 may be a factory joint, as shown in Fig. 4, or comprises a prefabricated elastomeric sleeve, i.e., the joint 21 may be a field joint.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A submarine power cable (1) comprising a conductor (3), an insulation system (5) arranged around the conductor (3), the insulation system (5) comprising an inner semiconducting layer (7), an insulation layer (9) arranged around the inner semiconducting layer (7), and an outer semiconducting layer (11) arranged around the insulation layer (9), and a polymeric sheath (15) arranged around the insulation system (5), wherein the submarine power cable (1) has a first section (1c) arranged axially between two second sections (1a, 1b), wherein the first section (1c) has a mechanically flexible sheath arranged around the insulation system (5), wherein the mechanically flexible sheath has a lower radial water permeability than a radial water permeability of any layer arranged outside the insulation system (5) in the second sections (1a, 1b).

2. The submarine power cable (1) as claimed in claim 1, wherein the mechanically flexible sheath is a water blocking layer (13) arranged around the insulation system (5) along at least 20% of the length of the first section (1c), such as along the entire first section (1c).

3. The submarine power cable (1) as claimed in claim 2, wherein the water blocking layer is a metallic water blocking layer.

4. The submarine power cable (1) as claimed in claim 3, wherein the metallic water blocking layer is a longitudinally welded metal sheath, an extruded metal sheath, or a longitudinally bonded laminated sheath.

5. The submarine power cable (1) as claimed in claim 1 or 2, wherein each of the two second sections (1a, 1b) are longer than the first section (1c).

6. The submarine power cable (1) as claimed in any of the preceding claims, wherein the first section (1c) is at least 1 m, such as at least 2 m, such as at least 3 m.

7. The submarine power cable (1) as claimed in any of the preceding claims, wherein the first section (1c) is at most 200 m, such as at most 150 m, such as at most 100 m, such as at most 50 m.

8. The submarine power cable (1) as claimed in any of the preceding claims, wherein each second section (1a, 1b) is at least 500 m long, such as at least 1000 m long, such as at least 5000 m long.

9. The submarine power cable (1) as claimed in any of the preceding claims, comprising a joint (21) arranged in the first section (1c).

10. The submarine power cable (1) as claimed in claim 9, wherein the joint (21) comprises a conductor joint (23) and a joint insulation system (25) arranged around the conductor joint (23).

11. The submarine power cable (1) as claimed in claim 10, wherein the joint insulation system (25) is a vulcanized joint insulation system or comprises a prefabricated elastomeric sleeve.

12. The submarine power cable (1) as claimed in any of the preceding claims, comprising a water swellable tape arranged between the insulation system (5) and the polymeric sheath (15) along the entire second sections (1a, 1b).

13. The submarine power cable (1) as claimed in any of the preceding claims, comprising a water swellable tape arranged between the insulation system (5) and the polymeric sheath (15) along the entire first section (1c).

14. The submarine power cable (1) as claimed in any of the preceding claims, wherein the submarine power cable (1) is an AC power cable or a DC power cable.

15. The submarine power cable (1) as claimed in any of the preceding claims, comprising an outer sheath or outer serving (19), which is the outermost layer of the submarine power cable (1), wherein the outer sheath or outer serving (19) extends along a majority of or the entire length of the first section (1c).
